(19)

Europäisches
Patentamt

European
Patent Office

Office européen
des brevets

(11) **EP 2 420 311 A2**

(12) **EUROPEAN PATENT APPLICATION**
published in accordance with Art. 153(4) EPC

(43) Date of publication:
**22.02.2012 Bulletin 2012/08**

(21) Application number: **10761827.4**

(22) Date of filing: **05.04.2010**

(51) Int Cl.:
**B01D 71/00** *(2006.01)*    **B01D 71/76** *(2006.01)*

(86) International application number:
**PCT/KR2010/002057**

(87) International publication number:
**WO 2010/117166 (14.10.2010 Gazette 2010/41)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **06.04.2009 KR 20090029439**

(71) Applicant: **SK Innovation Co., Ltd.**
**Jongro-gu**
**Seoul**
**110-110 (KR)**

(72) Inventors:
• **KANG, Gwigwon**
  **Daejeon 305-793 (KR)**

• **LEE, Youngkeun**
  **Seoul 137-797 (KR)**
• **RHEE, Jang-weon**
  **Daejeon 302-120 (KR)**
• **JUNG, Inhwa**
  **Cheonan-si**
  **Chungcheongnam-do 330-854 (KR)**

(74) Representative: **Stolmár, Matthias**
  **Stolmár Scheele & Partner**
  **Patentanwälte**
  **Blumenstrasse 17**
  **80331 München (DE)**

(54) **POLYOLEFIN-BASED MULTILAYER MICROPOROUS FILM WITH EXCELLENT PHYSICAL PROPERTIES AND HIGH TEMPERATURE STABILITY**

(57)    Provided is a microporous polyolefin multilayer film which may be used as a separator for a battery, and a method for preparing the same. At least one layer of the microporous polyolefin multilayer film contains 90-100 wt% of polyethylene having a melting temperature of 130~140**°C** and at least the other layer has 20 wt% or more of a heat resistant resin and 80 wt% or less of a filler selected from the group consisting of an organic filler, an inorganic filler and a mixture thereof. The heat resistant resin is preferably a semi crystalline polymer or an amorphous polymer. Preferably, the semi crystalline polymer has a degree of crystallinity of 10~45% or a heat of fusion for melting of 20-90 J/g and has a melting temperature of 145~250**°C** and a glass transition temperature of -100~90**°C**. Also, preferably, the amorphous polymer has no crystal and has a glass transition temperature of 90~120**°C**.

【Figure 1】

**Description**

**[Technical Field]**

The present invention relates to a microporous polyolefin multilayer film possessing good mechanical properties and thermal stability. More particularly, the present invention relates to a microporous polyolefin multilayer film, which not only possesses a low shutdown temperature due to polyethylene and a high melt fracture temperature due to a heat resistant resin and low shrinkage at the same time but also possesses uniform micropores and high strength/stability that are characteristics of a separator prepared through a wet process and high permeability/high strength according to large pores prepared by a dry process at the same time, thereby capable of showing excellent effect when used in a high capacity/high power secondary battery.

**[Background Art]**

A microporous polyolefin film is widely used as a battery separator, a filter for separation and a membrane for microfiltration, due to its chemical stability and good mechanical properties.

Among methods for preparing a microporous film from polyolefin, a wet process which is composed of mixing polyolefin with diluent at a high temperature to form a single phase, phase-separating the polyolefin and the diluent in a cooling process and then extracting the diluent to form pores in the polyolefin is widely used in manufacturing separators for a high capacity/high power lithium ion secondary battery, etc. since a thin film with good strength, good permeability, uniform pores and good quality stability can be prepared by this method.

An example of preparing of a general porous film by the wet process is disclosed in US Pat. No. 4,247,498, in which a technology of blending a mixture of polyethylene and corresponding diluent at a high temperature to form thermodynamic single phase solution, then cooling the mixture to phase-separate the polyethylene and the diluent in the cooling process and preparing a porous polyolefin film is disclosed.

The lithium ion secondary battery has danger of explosion due to a short although it is an excellent battery having a very high energy density, and a separator is therefore greatly required to have quality stability together with a high quality level. In accordance with the recent trend of high capacity and high power of the lithium ion secondary battery such as a battery for a hybrid vehicle, there is a greater demand for a thermal stability of a separator in addition to the quality stability of separators prepared through wet process. This is because there is increasing risk of explosion by the meltdown of the separator on overheating of the battery if the thermal stability of the separator is not surpassing.

The thermal stability of the battery is influenced by a shutdown temperature, a meltdown temperature of the separator, a shrinkage at a high temperature, a melt shrinkage in a transverse direction (a direction vertical to a winding direction of electrode/separator), and a strength of the separator at a high temperature.

The shutdown temperature is a temperature at which micropores of the separator is closed to prevent electric current from flowing no longer when an internal temperature of the battery is abnormally increased due to abnormality of the battery. The meltdown temperature is a temperature at which the separator is melt fractured to allow the current to flow again when the temperature of the battery is continuously increased over the shutdown temperature. For the stability of the battery, it is preferred that the shutdown temperature is lower and the meltdown temperature is higher.

The shrinkage at a high temperature is a degree that the separator is shrunken by before the separator is melted when the temperature of the battery is raised by internal/external factors and the transverse directional melt shrinkage is a degree of shrinkage generated during the separator is melted. If the two shrinkages are large, an edge portion of the electrode of battery may be exposed to cause a short between electrodes in the shrinkage process when the temperature of battery increases, thereby to take place of heating/ignition/explosion, etc. If the shrinkage at a high temperature and the transverse directional melt shrinkage are large even if the melt fracture temperature of the separator is high, the edge portion of the electrode of battery may be exposed to cause a short between electrodes in the process that the separator is melted.

The high strength of the separator at a high temperature is required to prevent damage of the separator which may be caused at a high temperature by a dendrite produced on an electrode during the charging/discharging process of the battery and thus to prevent the short between the electrodes. Also, a weak strength of the separator at a high temperature may cause a short due to fracture of the separator. This may generate heating/ignition/explosion, etc. due to the short between electrodes.

Efforts to improve the thermal stability of the separator have been mainly developed in three directions : raising heat resistance of the separator by adding inorganic substances or heat resistant resin into polyethylene, coating heat resistant material on a surface of the separator, and forming a multilayer film having a layer with a heat resistance.

US Pat. No 6,949,315 discloses the film with improved thermal stability of the separator by adding 5-15 wt% of inorganic substance such as titanium oxide to ultrahigh molecular polyethylene. However, this method may result, despite its effect of enhancement in the thermal stability due to adding of the inorganic substance, in problems of deterioration in mixing performance due to the addition of the inorganic substance and generation of pin holes upon stretching and non-uniform quality due to the deterioration of kneadability, and may also result in deterioration in mechanical properties such as a impact strength, etc. due to a lack of compatibility in the interface between the inorganic substance and polymer resin. These disadvantages are inevitable in the separator when using inorganic substances.

A separator prepared by adding a resin having a good heat resistance instead of the inorganic substance is disclosed in US Pat. No. 5,641,565. In this technique, 20-75 wt% of organic liquid and 10-50 wt% of inorganic substance are mixed with a resin mixture where polyethylene is mixed with 5-45 wt% of polypropylene and then the organic liquid and the inorganic substance are extracted, thereby preparing a separator. Although the inorganic substance is extracted by this technique, this technique still has the aforementioned problem upon the mixing of the inorganic substance and further shows, as mentioned in the patent itself, deterioration in mechanical properties due to addition of polypropylene that cannot be mixed homogeneously with polyethylene. Also, this method has a disadvantage that the process becomes complicated as the processes for extracting and removing the inorganic substance are added, and requires relatively a large amount of polypropylene to obtain sufficient heat resistant effect, which deteriorates the mechanical properties of the separator more.

A method of coating a heat resistant material on a surface of microporous film is disclosed in US Pat. Publication No. 2006/0055075AI. However, the coating method may have high risks of deterioration in permeability of the entire film due to its limitation in raising permeability of a coating layer and non-uniform quality due to low wetting capability between the coating layer and the microporous film.

A method of forming a multilayer film for increasing the thermal stability of the separator is to use lamination. US Pat. No. 5,691,077 discloses a method of preparing a trilayer separator by laminating polypropylene layer having a high meltdown temperature (having a high melting temperature) on polyethylene having good shutdown property (having a low melting temperature). Although this separator is good for thermal property, it has problems of not only reduction in productivity due to addition of a separately conducted lamination process but also delamination caused by poor lamination, along with disadvantages of non-uniformity of stretching, generation of pin holes and non-uniformity of thickness in the process of preparing a fabric film by a low temperature dry process. This method has, despite its good heat resistance, problems of low strength, low permeability, quality uniformity and productivity, which are indispensable for a separator for a secondary battery.

Japanese Patent Application Publication No. 2002-321323 and PCT Publication No. WO2004/089627 disclose multilayer separators that have a microporous polyethylene layer prepared by a wet process as a main layer and a layer of a mixture of polyethylene and polypropylene also prepared by a wet process as a surface layer. Although these separators are good for quality stability since they are prepared by a wet process, they have limitation that their heat resistances cannot be higher than that of the polyethylene resin and they cannot be applied to high capacity/high power battery since it is impossible to realize a high permeability when the content of the polypropylene is increased so as to improve the heat resistance. Also, they have a disadvantage that the preparing process becomes complicated since all layers of the separator are prepared by a wet process. PCT Publication No. WO2006/038532 discloses multilayer separator through wet process including inorganic particles, and this separator is manufactured through the complicated mixing process as all layers of the separator are prepared by a wet process as described above, and also shows a low improvement in mechanical properties as production is conducted in the state that even the heat resistant layer includes 50 % or more of diluent which should be extracted in the film production process (reduced stretching effect is shown since the heat resistant layer is stretched with being softened by inclusion of the diluent). PCT Publication No. WO2007/046473 discloses a multilayer separator having a surface layer formed of polypropylene alone. This is a method of obtaining a high permeability by stretching a layer formed of the polypropylene having a high crystallinity at a low temperature to cause internal crack, and can easily realize the high permeability but shows low improvement in the heat resistance as the network in the polypropylene layer is formed weak.

Indispensible properties of a separator for a secondary battery are high strength, high permeability and quality uniformity, and in recent years, thermal stability is largely required in addition thereto. However, the conventional techniques as described above could not have accomplished the high thermal stability simultaneously with the quality stability and the strength/permeability of levels as same as those of the separator by a wet process.

**[Disclosure]**

**[Technical Problem]**

After repeated wide studies to solve the problems of the conventional arts as described above, the present inventors found that by mixing a semicrystalline polymer having a degree of crystallinity of 10-45% or a heat of fusion of 20~90 J/g and having a melting temperature of 145~250°C and a glass transition temperature of -100~90°C or an amorphous polymer having a glass transition temperature of 90~120°C with an inorganic filler or an organic filler that remains in a solid phase at 130°C(an organic substance having a melting temperature or a glass transition temperature of 130~250°C) and then stretching the mixture, an interface between the resin and filler is broaden to form a pore and a porous film having good heat resistance and permeability can thus be prepared, and by using this porous film as a separate layer together with a porous film prepared by a wet process, a multilayer separator that includes a polyethylene porous layer having good mechanical properties and quality stability and a porous layer having good heat resistance and thus has high strength and high permeability at the same time can be prepared, and this multilayer separator has excellent strength, permeability, quality stability and thermal stability at the same time, and invented the present invention therefrom.

**[Technical Solution]**

Characteristics of a polyolefin multilayer film having good quality stability, strength, permeability and thermal stability are as follows:

(1) A microporous polyolefin film has two or more stacked layers, and among those layers there are at least one layer which contains 90 wt% or more of polyethylene having a melting temperature of 130~140°C and there are at least one layer which contains 20 wt% or more of a heat resistant resin and 80 wt% or less of a filler selected from the group consisting of an organic filler, an inorganic filler and a mixture thereof which remain in solid phase at 130□. The heat resistant resin is preferably a semi crystalline polymer or an amorphous polymer. Preferably, the semi crystalline polymer preferably has a degree of crystallinity of 10-45% or a heat of fusion of 20~90 J/g and has a crystalline melting temperature of 145~250°C and a glass transition temperature of -100~90°C. Also, preferably, the amorphous polymer preferably has no crystal and has a glass transition temperature of 90~120°C. The present invention provides a microporous polyolefin multilayer film as described above.

(2) In the (1), there is provided a microporous polyolefin multilayer film in which a mean pore size of a porous layer formed of polyethylene is 0.1 μm or less and a representative diameter of a pore of a porous layer formed of not the polyethylene but the semi crystalline polymer or amorphous polymer is 5~100 μm.

(3) In the (2), there is provided a microporous polyolefin film which has three or more stacked layers and has a layer containing 90~100 wt% of polyethylene having a melting temperature of 130~140°C as both surface layers.

(4) In the (2) or the (3), there is provided a microporous polyolefin multilayer film in which a thickness of the film is 9~30 μm, a puncture strength is 0.15 N/μm or more, a permeability is 1.5X10⁻⁵ Darcy or more, a puncture strength at 120°C is 0.05 N/μm or more and a melt fracture temperature is 170°C or higher.

(5) In the (4), there is provided a microporous polyolefin multilayer film in which a thickness of the film is 9~30 μm, a puncture strength is 0.20 N/μm or more, a permeability is 2.0X10⁻⁵ ~ 10.0X10⁻⁵ Darcy, a puncture strength at 120°C is 0.06 N/μm or more and a melt fracture temperature is 180°C or more.

(6) In the (5), there is provided a microporous polyolefin multilayer film in which shrinkages at 120°C for 1 hour in longitudinal and transverse directions are 0~12%, and a TMA maximum shrinkage in the transverse direction under an external stress of 2.0 mN/μm normalized with the film thickness is 0% or less.

(7) In the (6), there is provided a microporous polyolefin multilayer film in which shrinkages at 120°C for 1 hour in longitudinal and transverse directions are 0~10%, and a TMA maximum shrinkage in the transverse direction under an external stress of 1.5mN/μm standardized with a thickness of a partition film is 0% or less.

Hereinafter, the present invention will be described in more detail.

The present invention provides a microporous polyolefin multilayer film having two or more stacked layers, wherein at least one layer is a microporous polyolefin layer containing 90~100 wt% of polyethylene having a melting temperature of 130~140°C and at least one the other layer is a heat resistant resin layer containing a heat resistant resin selected from the group consisting of a semi crystalline polymer having a degree of crystallinity of 10-45% or a heat of fusion of 20~90 J/g and having a crystalline melting temperature of 145~250°C and a glass transition temperature of -100~90°C, an amorphous polymer having a glass transition temperature of 90~120°C, and a mixture thereof. Preferably, the heat resistant resin layer may include 20~75wt% of above mentioned heat resistant resin and 25~80 wt% of a filler selected from the group consisting of an organic filler, an inorganic filler and a mixture thereof which remain in solid phase at 130°C.

The present invention is a microporous polyolefin multilayer film having two or more stacked layers and at least one layer contains 90~100 wt% of polyethylene having a melting temperature of 130~140°C. General polyethylene has a limitation in raising the heat resistance as the melting temperature thereof is 135°C or lower but is effective to ensure battery safety since its shutdown temperature is low. The melting temperature of the polyethylene is preferably 130~140°C since the shutdown temperature is lower than being needed and the meltdown temperature of an entire multilayer separator may be hardly increased when the melting temperature of the polyethylene is lower than 130°C. A polyethylene content of the polyethylene layer is preferably 90~100 wt% since the battery safety may be deteriorated as mechanical properties of the polyethylene layer and the resulting mechanical properties of the entire multilayer film are deteriorated when the polyethylene content of the polyethylene layer is lower than 90 wt%.

One layer of the microporous polyolefin multilayer film having two or more stacked layers may contain 20 wt% or more of a heat resistant resin and may contain 80wt% or less of organic or inorganic filler which remains in a solid phase at 130°C. The heat resistant resin is preferably a semi crystalline polymer or an amorphous polymer. Preferably, the semi crystalline polymer should have a degree of crystallinity of 10~45% or a heat of fusion of 20~90 J/g and have a crystalline melting temperature of 145~250°C and a glass transition temperature of 90°C or less, preferably -100~900□. Also, the amorphous polymer preferably should have no crystal and have a glass transition temperature of 90~120°C.

In the present invention, the multilayer sheet which consists of polyethylene sheet and heat resistant resin sheet is stretched at a temperature where some of crystals within the polyethylene sheet prepared by the wet process is melt (about 100~130°C). It is effective to improve productivity since the process can be simplified by stretching the polyethylene layer and the heat resistant layer at the same time. When more than predetermined content of the heat resistant sheet is present as a solid having no flowability at the temperature of stretching the polyethylene sheet, the heat resistant resin is not stretched during the stretching process and is fractured, which may lead to problems of insignificant improvement in heat resistance and deterioration in mechanical properties. Therefore, the heat resistant resin is preferably the semi crystalline polymer having a degree of crystallinity of 10-45% or a heat of fusion of 20~90 J/g and having a crystalline melting temperature of 145~250°C and a glass transition temperature of 90°C or lower, preferably - 100~90°C or an amorphous polymer having a glass transition temperature of 90~120°C so that a predetermined level of flowability can be ensured at the stretching temperature range (about 100~130°C). When the degree of crystallinity of the semicrystalline polymer is over 45%, 50% or more of the heat resistant resin is present as a solid at the stretching temperature (although the content of the crystal is 45%, some chain of the resin connected with the crystal cannot ensure the flowability and thus 50% or more of resin has no flowability) and therefore fracture of the heat resistant layer may be caused. When the glass transition temperature is over 90°C even though the degree of crystallinity of the semicrystalline polymer is 45% or less, rigidity of the heat resistant resin is high at the stretching temperature and thus the heat resistant layer is fractured in the stretching process, thereby deteriorating the heat resistance and mechanical properties.

The degree of crystallinity is estimated by using a differential scanning calorimeter (DSC). The calculation is to divide heat content of heat absorption peak measured by the DSC by the heat of fusion of 100% crystal as described in documents, but it may be sufficient for the heat of fusion to be 20~90 J/g when it is sometimes not easy to determine the heat of fusion of 100% crystal. The heat of fusion of 90 J/g or less, particularly 20~90 J/g means low degree of crystallinity or ease of transforming crystalline and does not cause the fracture of the heat resistant layer in the stretching process. Also, the semi-crystalline resin as the heat resistant resin preferably has a melting temperature of 250°C or lower, more preferably 145~250°C since it is required not to melt and flow at a temperature of 130°C or higher which is the melting temperature of polyethylene in order to expect improvement in the heat resistance of the multilayer separator. When the melting temperature is over 250°C, an extruding temperature for kneading is excessively raised to generate thermal oxidation of the resin greatly, thereby resulting in quality deterioration. For the amorphous polymer, when the glass transition temperature is 90°C or less, the resin has sufficient flowability at the stretching temperature, which results in a good stretching property, but it is difficult to ensure the heat resistance higher than that of polyethylene. When the glass transition temperature is 120°C or more, the heat resistant resin has a low flowability at the stretching temperature and thus fractured in the stretching process, thereby resulting in low improvement in the heat resistance and deterioration in the mechanical properties. An amorphous polymer having a glass transition temperature of 90~120°C has a low flowability even at a temperature of 150°C or higher and thus shows a large improvement in the heat resistance of the multilayer separator.

As pore properties of the multilayer separator, the polyethylene layer has micropores formed through the stretching and extracting processes after the phase separation of polyethylene and the diluent and having a mean diameter of 0.02~0.1 μm, and the heat resistant resin layer has macropores formed through broadening of the interface between the matrix resin and the organic or inorganic filler and having a representative diameter of 0.5-100 μm.

The pores of the layer formed of polyethylene are micropores formed through the stretching and extracting processes after the phase separation of polyethylene and the diluent, have a mean diameter of 0.1 μm or less, preferably 0.02~0.1 μm, and are distributed uniformly in the entire film, which gives the film good mechanical properties, quality uniformity and stability, etc. Also, the pores of the layer formed of the heat resistant resin are macropores formed through broadening of the interface between the matrix resin and the organic or inorganic filler, are formed in a disc shape in planar direction of the porous film, have a representative diameter of 0.5-100 μm, and have good strength and permeability. The permeability is not good when the representative diameter of the macropores is lower than 5 μm and there is low improvement in the mechanical properties and heat resistance as the pores are excessively large when the representative diameter of the macropores is over 100 μm.

In the heat resistant resin layer including the inorganic filler, the inorganic filler acts not only as a nucleus for the formation of the pores in the pore formation process but also to remain in the final product to aid improvement in the heat resistance and to improve wetting property to electrolyte. The content of the inorganic filler is preferably 50~80 wt% and the content of the heat resistant resin is preferably 20~50 wt%. When the content of the inorganic filler is lower than 50 wt%, a sufficient amount of the pores is not formed and thus the permeability is not high. When the content of the inorganic filler is over 80 wt%, the content of the heat resistant resin is low and thus the network of the heat resistant resin is destroyed in the stretching process. Therefore, the separator shows a high permeability but is low improvement in the heat resistance and low mechanical properties. When forming the pores by using an organic filler, the organic filler is phase separated from the heat resistant resin in the state of the sheet prior to the stretching and is present in a form of a micro-particle, and the pores are formed as pore is generated in the interface between the organic filler and the heat resistant resin in the stretching process. In the stretching process, the content of the organic filler contained in the heat resistant resin layer is preferably 25~45 wt% and the content of the heat resistant resin is preferably 55~75 wt%. Since the organic filler has a low density compared to the inorganic filler, it is possible to form sufficient pores only using 25~45 wt% of the organic filler. The organic filler may be removed together in a process of removing the diluent in the polyethylene layer after the stretching. When using an organic filler which is soluble in a solvent for extracting the diluent in the polyethylene layer, it is possible to improve the permeability of the heat resistant resin layer as the organic filler is removed together in the extracting process and it is easy to handle the product as detachment of the filler is not generated in a process of handling the final product. The content of the heat resistant resin in the final product of the heat resistant resin layer prepared using such organic filler is 100%. On the contrary, when using an organic filler which is not soluble in a solvent for extracting the diluent, the organic filler remains in the heat resistant resin layer and helps to improve the heat resistance and wetting properties to the electrolyte of the heat resistant resin layer. The content of the heat resistant resin in the final product of the heat resistant resin layer prepared using such organic filler is 55~75 wt%.

The aforementioned inorganic filler and organic filler may be used alone, respectively, but may be used as a mixture thereof.

The present invention preferably has, although it is a film having two or more stacked layers, three or more stacked layers and has a layer having 90~100 wt% of polyethylene having a melting temperature of 130~140°C as both surface layers in view of characteristics and productivity of a separator. When a layer prepared using polyethylene through a wet process forms the surface layers, quality uniformity of both surface layers of the multilayer separator is good and thus quality uniformity of the multilayer separator can be improved. Also, the middle layer has large pores having a representative diameter of 5~100 $\mu$m and thus has a good permeability, and the surface layers has a small and uniform pores having a mean size of 0.02~0.1 $\mu$m and thus has good overcharge properties of a battery and good retention capability of the electrolyte. Further, as the heat resistant resin layer is placed in the middle layer, there is low detachment of the filler and it is easy to ensure production stability.

The thickness of the film in accordance with the present invention is preferably 9~30 $\mu$m in consideration of a film strength, a light weight of a battery and safety of a battery. When the film thickness is thinner than 9 $\mu$m, it is not possible to ensure safety as resistances against external stresses upon preparing battery and needle shapes such as dendrite generated upon charging/discharging of a battery, and it is not possible to ensure sufficient heat resistance because the thickness of the heat resistant resin layer is thin. On the contrary, when the film thickness is thicker than 30 $\mu$m, there are problems that the permeability is deteriorated and the battery is thickened more than being needed. A thickness of the heat resistant resin layer is preferably 3 $\mu$m or more and more preferably 5~10 $\mu$m. The improvement in the heat resistance is not large when the thickness of the heat resistant resin layer is lower than 3 $\mu$m, and the mechanical properties and quality uniformity of the entire layer is deteriorated when the thickness of the heat resistant resin layer is over 10 $\mu$m.

The puncture strength at a room temperature is 0.15 N/$\mu$m or more and preferably 0.20~0.50 N/$\mu$m. When the puncture strength is lower than 0.15 N/$\mu$m, it is not possible to ensure the battery safety as a resistance against external damage which may be generated in the battery preparation process is low.

A puncture strength at 120°C is 0.05 N/$\mu$m or more and preferably 0.10-0.30 N/$\mu$m. When the puncture strength at 120°C is lower than 0.05 N/$\mu$m, it is not possible to ensure the safety as a separator is damaged at a high temperature by dendrite, which is generated upon charging/discharging process, and the like.

The multilayer separator of the present invention has a good thermal stability at a high temperature and high temperature puncture strength as it uses the semicrystalline polymer having a melting temperature of 145-250°C or the amorphous polymer having a glass transition temperature of 90~120°C.

The melt fracture temperature of the microporous film in accordance with the present invention depends on kind and content of the used heat resistant resin and filler, and is preferably 170°C or higher and more preferably 180~250°C. When the melt fracture temperature is lower than 170°C, improvement in the heat resistance of a battery is insignificant when considering that a melt fracture temperature of a separator using polyethylene alone is 150°C.

Shrinkage without stress at 120°C is 0~12% in longitudinal and transverse directions, respectively. More preferably, they are 0~10%, respectively. When the shrinkage is over 12%, it is not possible to ensure the battery safety as short between electrodes is generated by shrinkage.

A TMA maximum shrinkage in a transverse direction to an external force normalized with a thickness is 0% or less. The TMA is a device which measures a degree of shrinkage of the specimen in the melting process with raising temperature in a state that a predetermined force is applied, in which the degree of shrinkage is measured differently according to the applied force. Also, since the shrinkage is varied with the thickness of the specimen even when the same force is applied, the force applied from the outside should be normalized with a thickness. In the separator in accordance with the present invention, a TMA maximum shrinkage in a transverse direction is 0% or less when the force applied from the outside and normalized with a thickness is 2.0 0 mN/$\mu$m (applied force/thickness of specimen) and preferably a TMA maximum shrinkage in a transverse direction is 0% or less when the force is 1.5 mN/$\mu$m. The separator in accordance with the present invention has a small shrinkage because the heat resistant resin does not melt at the melting/shrinking temperature of polyethylene. Therefore, its shrinkage is small as compared to conventional separators when the same force is applied from the outside. When the shrinkage in a transverse direction at 2.0 mN/$\mu$m is over 0%, an edge portion of a battery may be exposed to cause a short between electrodes in melting and shrinking processes when an inside of the battery is at a high temperature, thereby deteriorating safety of the battery.

A process for preparing the microporous polyolefin multilayer film includes following processes. The processes includes: (a) melting and mixing a composition formed of a heat resistant resin (a semicrystalline polymer having a melting temperature of 145~250°C or an amorphous polymer having a glass transition temperature of 90~120□) and a filler; (b) melting and mixing a composition formed of polyethylene having a melting temperature of 130°C or higher and diluent; (c) forming a multilayer sheet by stacking the melts melted and mixed in the steps (a) and (b); (d) forming a film by stretching the multilayer sheet at a temperature range where 30~80% of polyethylene crystals of the polyethylene layer of the multilayer sheet is melted; (e) extracting the diluent and some organic filler from the film; and (f) heat-setting the film.

Hereinafter, each step will be described in more detail.

The step of (a) melting and mixing a composition formed of a heat resistant resin (a semicrystalline polymer having a melting temperature of 145~250°C or an amorphous polymer having a glass transition temperature of 90~120°C) and a filler is conducted.

A composition formed of 20~75 wt% of a semicrystalline polymer having a degree of crystallinity of 10-45%, a melting temperature of 145~250°C and a glass transition temperature of -100~90°C or an amorphous polymer having a glass transition temperature of 90~120°C, and 25~80 wt% of filler is melted and mixed using a twin screw compounder, a kneader or a Banbury mixer designed for the mixing of the resin and filler.

The melting and mixing is preferably conducted at a temperature 40~70°C higher than the melting temperature of the resin (in a case of the semicrystalline polymer) or the glass transition temperature (in a case of the amorphous polymer) for the inorganic filler, and at a temperature 40~70°C higher than the highest temperature of the melting temperature of the resin (in a case of the semicrystalline polymer), the glass transition temperature (in a case of the amorphous polymer), the melting temperature of the organic filler (in a case of the semicrystalline polymer or crystalline organic filler) and the glass transition temperature of the organic filler (in a case of the amorphous polymer filler) for the organic filler. When the melting and mixing temperature is lower than the aforementioned temperature range, poor mixing performance may be generated due to non-melt of the resin, and on the contrary, when the melting and mixing temperature is higher than the aforementioned temperature range, thermal oxidation of organic substances including the heat resistant resin may be generated severely due to too high temperature. The heat resistant resin and the filler may be introduced into the compounder with being previously blended or may be introduced from separated feeders, respectively. Further, they may be introduced in a form of a composition preliminarily compounded in previous in another kneader.

An example of the heat resistant resin which is usable in the present invention may include semicrystalline polymers such as polypropylene, polyamide resin (nylon based resin), polybutylene terephthalate (PBT), polyethylene terephthalate (PET), polychlorotrifluoroethylene (PCTFE), polyoxymethylene (POM), polyvinyl fluoride (PVF), polyvinylidene fluoride (PVdF), and amorphous polymers such as polyacrylic acid, polymethacrylate, polystyrene, ABS resin.

Although the kind of the polypropylene among the aforementioned resins is not particularly limited, polypropylene homopolymer cannot be used due to its high degree of crystallinity and it is preferred to use one of a copolymer of propylene and another olefin or a mixture thereof. As a copolymer, both random copolymer and block copolymer can be used. The copolymerized olefin besides the propylene preferably includes ethylene, butene-1, pentene-1, hexane-1, 4-methylpentene-1, octene-1.

Though a preferred molecular weight of the heat resistant resin differs according to the kind of the resin, the weight averaged molecular weight of $1.0 \times 10^4 \sim 5.0 \times 10^6$ is more preferred.

An example of the inorganic filler may include silicon dioxide ($SiO_2$), aluminum oxide ($Al_2O_3$), calcium carbonate ($CaCO_3$), barium titanium oxide ($BaTiO_3$), titanium oxide ($TiO_2$), naturally or organically modified clays, or a mixture thereof, which have a mean particle size of 0.1-3 $\mu$m.

The organic filler is a resin of a kind different from the matrix resin that forms the network of the heat resistant resin and preferably includes a semicrystalline polymer having a melting temperature of 130~250°C, an amorphous polymer having a glass transition temperature of 130~250°C and an organic substance having a melting temperature of 130~200°C and a boiling temperature of 300°C or higher. Further, the organic filler may include, other than the heat resistance resin, polycarbonate, polyarylate, polysulfone, and polyetherimide.

The composition may be, if necessary, further added with additives, such as oxidation stabilizer, UV stabilizer, antistatic agent, etc., for improvement of a certain function.

The step of (b) melting and mixing a composition formed of polyethylene having a melting temperature of 130°C or higher and diluent is conducted.

In the process of melting/mixing/extruding the polyethylene and the diluent, content of the polyethylene is preferably 20~50 wt%. When the content of the polyethylene is lower than 20 wt%, it is difficult to ensure a strength and kneadability for the microporous film, and on the contrary, when the content of the polyethylene is over 50 wt%, extruding and mixing performance is lowered and a permeability of a separator is greatly decreased.

The polyethylene used in this step is homopolyethylene, polyethylene copolymer or a mixture thereof. Also, the polyethylene of the present invention is homopolyethylene formed of ethylene alone, copolymerized polyethylene formed by copolymerization of ethylene and C3-8 $\alpha$-olefin or a mixture thereof, and has a melting temperature of 130°C or higher. An example of the C3-8 $\alpha$-olefin comonomer may include propylene, 1-butene, 1-hexene and 4methylpentene-1. When the melting temperature of the polyethylene is lower than 130°C, the permeability of the separator is greatly dropped and thus the thermal stability of the entire separator may be deteriorated as the crystallinity of the polyethylene is low. The most preferred melting temperature of the polyethylene is 130~140□.

It is preferred that the polyethylene has a weight averaged molecular weight of $2x10^5 \sim 3\times10^6$. When the weight-averaged molecular weight of the polyethylene is lower than $2\times10^5$, the mechanical properties of the final porous film is weakened. When the weight averaged molecular weight of the polyethylene is higher than $3\times10^6$, extruding and mixing performance is deteriorated to cause lowering in productivity. In the present invention, more preferred weight averaged molecular weight is $2\times l0^5 \sim 1.5xl0^6$.

As the diluent, all organic liquids that form a single phase with resin at an extruding temperature can be used. An example of the diluent includes aliphatic such as nonane, decane, decalin and paraffin oil, or phthalic acid ester such as cyclic hydrocarbon, dibutyl phthalate and dioctyl phthalate. Preferably, paraffin oil that is harmless to human body and has a high boiling point and less volatile components is suitable. More preferably, paraffin oil having a kinetic viscosity of 20-200 cSt at a temperature of 40°C is suitable. When the kinetic viscosity of the paraffin oil is over 200 cSt, it leads to a high kinetic viscosity in the extrusion process to generate problems of increase in load, surface defects of a film and a sheet, and it also leads to difficulties in extraction in the extraction process to cause problems of deterioration in productivity and decrease in the permeability due to remaining oil. When the kinetic viscosity of the paraffin oil is lower than 20 cSt, it leads to difficulties in mixing in the extrusion process due to viscosity difference with melted polyethylene in the extruder.

The composition is melted and mixed using a twin screw compounder, a kneader or a Banbury mixer designed for the mixing of the diluent and polyethylene. The melting and mixing temperature is suitably 180~250°C. The polyethylene and the diluent may be introduced into the compounder with being previously blended or may be introduced from separated feeders, respectively.

The composition may be, if necessary, further added with additives, such as oxidation stabilizer, UV stabilizer, antistatic agent, etc., for improvement of a certain function.

The step of (c) forming a multilayer sheet by stacking the melts melted and mixed in the steps (a) and (b) is conducted.

To prepare the sheet from the melt, all of conventional casting and calendaring processes can be used. A suitable temperature of the casting or calendaring roll is 30 to 80°C. The temperature of the cooling roll of below 30°C may cause generation of wrinkles of the sheet due to rapid cooling of the sheet, and the temperature of the cooling roll of over 80°C may cause a problem of surface defects due to insufficient cooling.

To form a multilayer sheet, conventional co-extrusion or and thermal bonding process can be used. The co-extrusion is a process of preparing a multilayer sheet by co-extruding melts extruded from respective extruders through a multilayer T die when molding the sheet, and the thermal bonding is a process of overlapping sheets obtained from respective extruders and thermally bonding them with pressure.

A process of (d) forming a film by stretching the multilayer sheet at a temperature range where 30~80% of polyethylene crystals of the polyethylene layer of the multilayer sheet is melted is conducted.

The stretching may be conducted by any stretching process such as a tenter type simultaneous stretching and a successive stretching in which a primary stretching in a longitudinal direction is conducted by using a roll and then a secondary stretching in a transverse direction is conducted using a tenter. Stretching ratios are four times or more in the longitudinal and transverse directions, respectively, and gross stretching ratio is preferably 25-60 times. When the stretching ratio in one direction is less than 4, orientation in the one direction is not sufficient and at the same time, balance of mechanical properties between the longitudinal and transverse directions is broken to result in deterioration in puncture strength. Also, when the gross stretching ratio is below 25 times, stretching is not sufficient, and when the gross stretching ratio is over 60 times, there is a high risk of generation of fracture during the stretching and the shrinkage of the final film is increased.

The stretching temperature varies depending on a melting point of polyethylene and concentration and kind of the diluent. The optimal stretching temperature is preferably selected from a temperature range where 30-80% of polyethylene crystals of the polyethylene layer of the multilayer sheet are melted. The amount of the melted crystal according to the temperature can be obtained from DSC analysis for the sheet. When the stretching temperature is selected from a temperature range lower than the temperature where 30% of polyethylene crystals of the polyethylene layer is melted, the stretchability is deteriorated as the film have no softness and thus there is a high risk of generation of fracture and unstretching during the stretching. On the contrary, when the stretching temperature is selected from a temperature range higher than the temperature where 80% of polyethylene crystals of the polyethylene layer is melted, the uniformity of thickness is deteriorated due to partial overstretching and the mechanical properties is deteriorated due to less orientation of the resin, despite to stretching easily and less generation of unstretching. The aforementioned temperature range for stretching is not the range where the heat resistant resin is melted, but is the range where it is possible to ensure softness so that the heat resistant resin can be stretched. Through the stretching, in the heat resistant resin - filler layer, the heat resistant resin is not fractured but stretched, and at the same time the interface between the heat resistant resin and the filler is broaden to form the pore. The heat resistant resin stretched as such has, since it is stretched without the diluent, high stretching effect and gives improvement in the mechanical properties of the entire separator.

The step of (e) extracting the diluent and some organic filler from the film is conducted.

The sheet, i.e. the film, which has reduced thickness through the stretching process, is subject to extraction of the diluent in the polyethylene layer and extractable organic filler in the heat resistant resin layer by using an organic solvent and then being dried. The organic solvent usable in the present invention is not particularly limited and may be any solvent that can extract the diluent and organic filler used in the extrusion of the resin, but is preferably methyl ethyl ketone, methylene chloride and hexane that have high extraction efficiency and are dried quickly. The extraction may be conducted by all conventional solvent extraction processes such as immersion, solvent spraying and ultrasonic processes in alone or in combination with another. Upon the extraction, the content of the residual diluent should be 1 wt% or less. When the content of the residual diluent is over 1 wt%, the mechanical properties are deteriorated and the permeability of the film is reduced.

The amount the residual diluent greatly depends on the extraction temperature and the extraction time. Although the higher extraction temperature leads to increase in solubility of the diluent into the solvent, it is preferred that the extraction temperature is 20~40°C in consideration of safety problem due to the boiling of the solvent. Since the extraction efficiency is greatly reduced when the extraction temperature is the freezing temperature of the diluent or below, the extraction temperature should be higher than the freezing temperature of the diluent. The extraction time is, though it depends on the thickness of the film, preferably 2~4 minutes when preparing the microporous film having a thickness of 9~30 $\mu$m.

The step of (f) heat-setting the film is conducted.

The film dried after the extraction is subject to the heat-setting step to finally remove the residual stress and thus reduce the shrinkage of the final film. The heat-setting process is to remove the residual stress by holding compulsorily the film to be shrunken, and the shrinkage and high temperature puncture strength are influenced by the temperature and setting ratio of heat setting process. When the heat-setting temperature is high, the stress in the resin is reduced and thus the shrinkage is decreased and the puncture strength at high temperature is raised. The puncture strength is decreased together with reduction in the stress in the resin as the measurement temperature is raised. However, when the heat-setting temperature increases, the puncture strength at high temperature is higher since the stress is sufficiently reduced during the heat-setting process and thus the reduction in the puncture strength is not large. However, when the heat-setting temperature is too high, the film is partially melted to close the micropores, thereby resulting in deteriorating in the permeability. The suitable heat-setting temperature is preferably selected from the temperature range where 10~40 wt% of crystals of the polyethylene layer is melted. When the heat-setting temperature is selected at the temperature range lower than the temperature where 10 wt% of crystals of the polyethylene layer is melted, there is no removal of the residual stress of the film as the reorientation of the molecules within the film is not sufficient, and when the heat-setting temperature is selected from the temperature range higher than the temperature where 40 wt% of crystals of the polyethylene layer is melted, the micropores are closed due to partial melt to result in deteriorating in the permeability. Also, upon the heat-setting, a tenter type machine is used to conduct step-by-step heat-setting, to improve the mechanical properties such as a tensile strength and a puncture strength and to reduce the shrinkage. In the first step of the heat-setting process, the film is stretched by 20~50% in a transverse direction to increase the permeability and improve the tensile strength and a puncture strength. When the film is stretched over 50%, there are advantages of improvement of the permeability and tensile strength, but there are disadvantages that a TMA shrinkage in a transverse direction is increased as the shrinkage is increased and the orientation in a transverse direction is increased and the size of the pore is excessively increased. In the second step, the width of the firstly enlarged film is shrunken by 15~40%. With heat applied, the stress is reduced and the orientation of the resin is reduced through the shrinkage in a transverse direction to decrease the shrinkage and the TMA shrinkage in a transverse direction. At this time, the permeability and the puncture strength are excessively reduced when the width of the product is shrunken by 40% or more, and it is not possible to ensure the safety of a battery as the stress and the resin orientation are not reduced and thus the shrinkage and the TMA shrinkage in a transverse direction are increased and the size of the pore remains large when the width of the product is shrunken 15% or less. The heat-setting time may become relatively shorter when the heat-setting temperature become higher, and relatively longer when the heat-setting temperature become lower. Preferably, the heat-setting time is 15 second to one minute.

The stretching, extraction and heat-setting steps are preferably conducted in a continuous process.

**[Advantageous Effects]**

The microporous multilayer film in accordance with the present invention not only possesses a low shutdown temperature due to polyethylene and a high meltdown temperature and low shrinkage property due to the heat resistant resin and the filler at the same time but also possesses uniform micropores and high strength/stability properties that are characteristics of a separator prepared by a wet process and high permeability/high strength properties according to large pores prepared by a dry process at the same time, thereby capable of showing excellent effect when used in a high capacity/high power secondary battery.

**[Description of Drawings]**

Fig. 1 illustrates a frame for measuring a melt fracture temperature of a microporous film in accordance with an embodiment of the present invention.

Fig. 2 illustrates that a microporous film in accordance with an embodiment of the present invention is fixed to the frame for measuring the melt fracture temperature of the microporous film using a tape.

**[Mode for Invention]**

<u>Example</u>

1. Molecular weight

Molecular weight and molecular weight distribution of polyolefin were measured by a high temperature Gel Permeation Chromatography (GPC) available from Polymer Laboratory.

2. Analysis for thermal properties (melting temperature, heat of fusion, degree of crystallinity, glass transition temperature, etc.)

Analysis for thermal properties of a sheet and a heat resistant resin for the stretching was conducted with a Differential Scanning Calorimetry (DSC, DSC-822E available from Mettler Toledo). For analyzing the sheet, a temperature of sample having a weight of 5 mg was raised with scanning rate of 10 °C/min until the sheet was completely melted, and a melting peak of a polyethylene layer was obtained therethrough. For analyzing the heat resistant resin, a temperature of sample having a weight of 5 mg was raised with scanning rate of 10 °C/min until the resin was completely melted, temperature decreased with scanning rate of 10 °C/min to completely freeze the resin and then temperature raised again with scanning rate of 10 °C/min. During the process, a glass transition temperature, a melting temperature and a heat of fusion were measured, and a degree of crystallinity was calculated by the following equation:

$$\text{Degree of crystallinity (\%)} = \{(\text{measured heat of fusion})/(\text{heat of fusion of 100\% crystal})\} \times 100$$

3. Gas permeability (Darcy)

A gas permeability was measured by a porometer (CFP-1500-AEL of PMI). In general, the gas permeability is expressed by Gurley number, but according to the Gurley number, it is difficult to compare relative permeability according to porous structure of a separator itself since influence by a thickness of the separator is not corrected. To solve the aforementioned problem, Darcy's permeability constant was used in the present invention. The Darcy's permeability constant is obtained by the following mathematical equation, and nitrogen was used in the present invention.

$$C = (8\ F\ T\ V)\ /\ (\pi D^2\ (P^2-1))$$

where,

C = Darcy's permeability constant

F = flow velocity

T = thickness of sample

V = viscosity of gas (0.185 for $N_2$)

D = diameter of sample

P = pressure

In the present invention, a averaged value of Darcy's permeability constant in the pressure range of 100~200 psi was used.

4. Mean pore diameter of polyethylene layer

A mean pore diameter of a polyethylene layer was measured by a half-dry method using a porometer (CFP-1500-AEL of PMI) according to ASTM F316-03 after peeling the polyethylene layer off from the multilayer separator film. Galwick liquid (surface tension: 15.9 dyne/cm) available from PMI was used to measure the pore diameter.

5. Representative pore diameter of heat resistant resin layer

From a photograph by an scanning electron microscope for a surface of the heat resistant resin layer, surface areas of pores are measured and added from the largest pore to the smallest pore on an apparent area of the film surface until the added area reaches to 50% of the total area of the film and then a averaged value of the diameters of the added pores are defined as a representative pore diameter of the heat resistant resin layer.

6. Puncture strength

Puncture strength was defined as a strength of a separator when the pin which having a diameter of 1mm and radius of curvature of 0.5mm and mounted in the Universal Testing Machine(UTM) is piercing the separator film with a crosshead moving speed of 120mm/min.

7. Puncture strength at high temperature

The puncture strength at 120°C was defined as the puncture strength at high temperature. The measuring method is like abovementioned method to define puncture strength but is conducted at 120°C. To stabilize temperature at 120°C, the pin and specimen holder were placed in the oven which was maintained at 120°C for 3 minutes and more preferably for 5 minutes in consideration of both the temperature stabilization and efficiency.

8. TMA shrinkage in transverse direction

Thermo-Mechanical Analysis (TMA) was used to confirm shrinkage of separator in a transverse direction upon raising temperature and on melted state. TMA/SDTA840 available from Mettler Toledo was used for the measurement. Variation of a length in a transverse direction was confirmed while raising temperature of the separator from 30°C to 200°C by 5°C/min with applying an external stress in a transverse direction. A size of a specimen was 15 mm in a transverse direction and 6 mm in a longitudinal direction. Since the initial length of specimen was set 0% and a ratio of a varied length to the initial length was expressed by percent, the result was shown such that it was plus (+) % upon generation of shrinkage and was minus (-) % (0% or less) when the separator is melted and thus has an increased length. The equation for calculating the TMA shrinkage is as follows:

```
      TMA shrinkage (%) = 100 X {(initial length - length
  of specimen at respective temperature) / initial length}
```

In the TMA shrinkage, (-)% shrinkage (0% or less) means that the specimen is not shrunken and is lengthened by the external stress, which means that a force of shrinkage is lower than the external stress and thus the thermal stability of the separator is ensured.

9. Shrinkage at 120°C for 1 hour

A separator was cut by 15 cm X 15 cm and marked with a spacing of 10 cm in a longitudinal direction and a transverse direction, respectively. Then, the marked separator was placed in the oven which maintained at 120°C for 60 minutes and followed by measurement of spacing variation and calculation of the shrinkage. The shrinkage was calculated by the following equation:

$$\text{Shrinkage (\%)} = 100 \times \{(\text{initial spacing} - \text{spacing after being left at } 120°C) / \text{initial spacing}\}$$

10. Melt fracture temperature

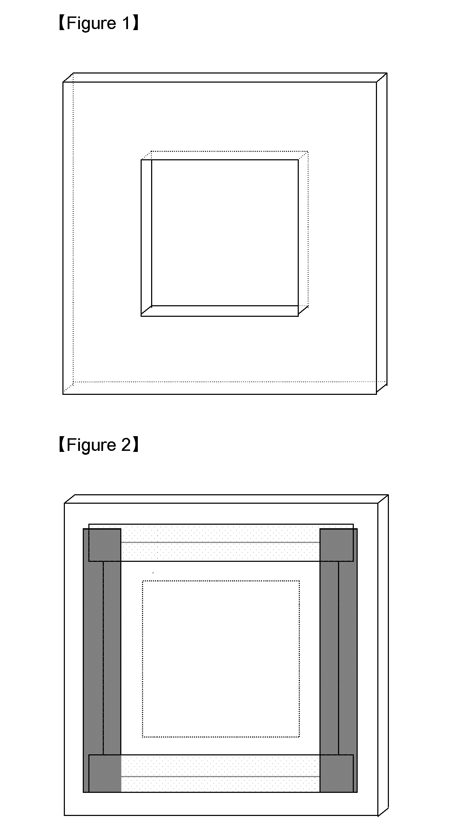

To measure the melt fracture temperature, a film (5 cm X 5 cm) was fixed to a frame (outer: 7.5 cm X 7.5 cm, inner: 2.5 cm X 2.5 cm) as shown in Fig. 1 by using a polyimide tape as shown in Fig.2 and was then placed in a convection oven maintained at a preset temperature for 5 minutes, followed by observation of fracture of the film. In order to prevent the hot wind from being directly applied to the specimen, an iron partitioning plate was provided at a hot wind discharge port. The highest temperature where the film was not fractured even after 5 minutes was defined as a melt fracture temperature.

Example 1

For a polyethylene layer, polyethylene having a weight average molecular weight of $3.0 \times 10^5$ and a melting temperature of 135°C and paraffin oil having a kinetic viscosity of 95 cSt at 40°C, were used, and the contents of the two components were 30 wt% and 70 wt%, respectively. The polyethylene and the paraffin oil were mixed in a twin screw compounder of $\varphi = 46$ mm, and the mixing temperature was 220□. The polyethylene was fed into a main hopper and the paraffin oil, i.e. diluent, was fed into an extruder using a side feeder. For a heat resistant layer, polypropylene with ethylene as a comonomer having a weight average molecular weight of $2.5 \times 10^5$, a melting temperature of 153°C and a degree of crystallinity of 42%, and $CaCO_3$ as a filler having a average particle size of 1.5 $\mu$m were used, and the contents of the two components were 30 wt% and 70 wt%, respectively. The polypropylene and filler in the heat resistant layer were mixed/extruded in a twin screw compounder of $\varphi = 40$ mm, and the mixing/extrusion temperature was 220□. The composition mixed/extruded as such was extruded at 220°C through a separate extruder of $\varphi = 15$ mm that is fixed to a multilayer T die designed for preparation of multilayer sheet and mounted in an extruder for extrusion of the polyethylene layer and then molded together with the polyethylene composition by a casting roll at 30 °C into a 2-layer (polyethylene layer/heat resistant layer) sheet. Through control of extrusion amounts of the two compositions, a thickness of a sheet formed of the polyethylene was 680 $\mu$m and a thickness of a sheet formed of the heat resistant resin was 140 $\mu$m.
The 2-layer sheet was sequentially stretched 6 times in a longitudinal direction at 114°C and 6 times in a transverse direction at 125°C. The stretched film was subject to extraction of diluent in the polyethylene layer therefrom using methylene chloride of 25~30°C. Heat-setting was performed at 127°C, wherein the film was lengthened 130% in a transverse direction as compared to the initial width in the stretching step and was shrunken 15.4% as compared to the final width of the stretching step in the shrinking step. The obtained mechanical properties of the separator are shown in Table 1 below.

Example 2

For a polyethylene layer, polyethylene having a weight average molecular weight of $3.0 \times 10^5$ and a melting temperature of 135°C and paraffin oil having a kinetic viscosity of 95 cSt at 40°C, were used, and the contents of the two components were 30 wt% and 70 wt%, respectively. The polyethylene and the paraffin oil were mixed in a twin screw compounder of $\varphi = 46$ mm, and the mixing temperature was 220°C. The polyethylene was fed into a main hopper and the paraffin oil, i.e. diluent, was fed into an extruder using a side feeder. For a heat resistant layer, polypropylene added with ethylene-polypropylene rubber and having a weight average molecular weight of $3.5 \times 10^5$, a melting temperature of 164°C and a degree of crystallinity of 41%, and polyarylate as a filler having a glass transition temperature of 200°C were used, and the contents of the two components were 60 wt% and 40 wt%, respectively. The polypropylene and filler in the heat resistant layer were mixed/extruded in a twin screw compounder of φ = 40 mm, and the mixing/ extrusion temperature was 250°C. The composition mixed/extruded as such was extruded at 250°C through a separate extruder of φ = 15 mm that is fixed to a multilayer T die designed for preparation of multilayer sheet and mounted in an extruder for extrusion of the polyethylene layer and then molded together with the polyethylene composition by a casting roll at 30°C into a 3-layer (polyethylene layer/heat resistant layer/polyethylene layer) sheet. Through control of extrusion amounts of the two compositions, a thickness of a sheet formed of the polyethylene was 420 μm and a thickness of a sheet formed of the heat resistant resin was 150 μm, respectively.

The 3-layer sheet was sequentially stretched 6.5 times in a longitudinal direction at 110°C and 6 times in a transverse direction at 124°C. The stretched film was subject to extraction of diluent in the polyethylene layer therefrom using methylene chloride of 25~30°C. Heat-setting was performed at 130°C, wherein the film was lengthened 140% in a transverse direction as compared to the initial width in the stretching step and was shrunken 21.4% as compared to the final width of the stretching step in the shrinking step. The obtained mechanical properties of the separator are shown in Table 1 below.

Example 3

For a polyethylene layer, polyethylene having a weight average molecular weight of $3.0 \times 10^5$ and a melting temperature of 135°C and paraffin oil having a kinetic viscosity of 95 cSt at 40°C, were used, and the contents of the two components were 30 wt% and 70 wt%, respectively. The polyethylene and the paraffin oil were mixed in a twin screw compounder of φ = 46 mm, and the mixing temperature was 220°C. The polyethylene was fed into a main hopper and the paraffin oil, i.e. diluent, was fed into an extruder using a side feeder. For a heat resistant layer, poly4-methyl-lpentene having a weight average molecular weight of $6.0 \times 10^5$, a melting temperature of 231°C and a melting heat of 40 J/g, and $CaCo_3$ as a filler having a average particle size of 2.5 μm were used, and the contents of the two components were 35 wt% and 65 wt%, respectively. The poly4-methyl-lpentene and filler in the heat resistant layer were mixed/ extruded in a twin screw compounder of φ = 40 mm, and the mixing/extrusion temperature was 280□. The composition mixed/extruded as such was extruded at 280°C through a separate extruder of φ = 15 mm that is fixed to a multilayer T die designed for preparation of multilayer sheet and mounted in an extruder for extrusion of the polyethylene layer and then molded together with the polyethylene composition by a casting roll at 30°C into a 3-layer (polyethylene layer/ heat resistant layer/polyethylene layer) sheet. Through control of extrusion amounts of the two compositions, a thickness of a sheet formed of the polyethylene was 500 μm and a thickness of a sheet formed of the heat resistant resin was 100 μm, respectively.

The 3-layer sheet was sequentially stretched 7 times in a longitudinal direction at 116°C and 6 times in a transverse direction at 128°C. The stretched film was subject to extraction of diluent in the polyethylene layer therefrom using methylene chloride of 25~30□. Heat-setting was performed at 130°C, wherein the film was lengthened 150% in a transverse direction as compared to the initial width in the stretching step and was shrunken 20% as compared to the final width of the stretching step in the shrinking step. The obtained mechanical properties of the separator are shown in Table 1 below.

Example 4

For a polyethylene layer, polyethylene having a weight average molecular weight of $3.0 \times 10^5$ and a melting temperature of 135°C and paraffin oil having a kinetic viscosity of 95 cSt at 40°C, were used, and the contents of the two components were 30 wt% and 70 wt%, respectively. The polyethylene and the paraffin oil were mixed in a twin screw compounder of φ = 46 mm, and the mixing temperature was 220°C. The polyethylene was fed into a main hopper and the paraffin oil, i.e. diluent, was fed into an extruder using a side feeder. For a heat resistant layer, polyvinylidene fluoride (PVdF) copolymerized with chlorotrifluoroethylene (CTFE) and having a weight average molecular weight of $2.0 \times 10^5$, a melting temperature of 167°C and a degree of crystallinity of 34.6%, and barium titanium oxide ($BaTiO_3$ as a filler having a average particle size of 0.4 μm were used, and the contents of the two components were 35 wt% and 65 wt%, respectively. The PVdF and filler in the heat resistant layer were mixed/extruded in a twin screw compounder of φ = 40 mm, and the mixing/extrusion temperature was 230°C. The composition mixed/extruded as such was extruded at 230°C through a separate extruder of φ = 15 mm that is fixed to a multilayer T die designed for preparation of multilayer sheet and mounted in an extruder for extrusion of the polyethylene layer and then molded together with the polyethylene composition by a casting roll at 30 °C into a 2-layer (polyethylene layer/heat resistant layer) sheet. Through control of extrusion amounts of the two compositions, a thickness of a sheet formed of the polyethylene was 800 μm and a thickness of a sheet formed of the heat resistant resin was 60 μm.

The 2-layer sheet was simultaneously stretched 7 times in a longitudinal direction and 5.5 times in a transverse direction at 117°C. The stretched film was subject to extraction of diluent in the polyethylene layer therefrom using methylene chloride of 25~30°C. Heat-setting was performed at 129°C, wherein the film was lengthened 150% in a transverse direction as compared to the initial width in the stretching step and was shrunken 26.7% as compared to the final width of the stretching step in the shrinking step. The obtained mechanical properties of the separator are shown in Table 1 below.

Example 5

For a polyethylene layer, polyethylene having a weight average molecular weight of $3.0X10^5$ and a melting temperature of 135°C and paraffin oil having a kinetic viscosity of 95 cSt at 40°C, were used, and the contents of the two components were 30 wt% and 70 wt%, respectively. The polyethylene and the paraffin oil were mixed in a twin screw compounder of $\varphi = 46$ mm, and the mixing temperature was 220°C. The polyethylene was fed into a main hopper and the paraffin oil, i.e. diluent, was fed into an extruder using a side feeder. For a heat resistant layer, ABS resin having a weight average molecular weight of $5.0X10^5$ and a glass transition temperature of 98°C, and homopolypropylene as a filler having a weight average molecular weight of $2.5X10^5$ and a melting temperature of 163°C were used, and the contents of the two components were 65 wt% and 35 wt%, respectively. The ABS resin and filler in the heat resistant layer were mixed/extruded in a twin screw compounder of $\varphi = 40$ mm, and the mixing/extrusion temperature was 240□. The composition mixed/extruded as such was extruded at 240°C through a separate extruder of $\varphi = 15$ mm that is fixed to a multilayer T die designed for preparation of multilayer sheet and mounted in an extruder for extrusion of the polyethylene layer and then molded together with the polyethylene composition by a casting roll at 30 °C into a 3-layer (polyethylene layer/heat resistant layer/polyethylene layer) sheet. Through control of extrusion amounts of the two compositions, a thickness of a sheet formed of the polyethylene was 400 $\mu$m and a thickness of a sheet formed of the heat resistant resin was 200 $\mu$m, respectively.

The 3-layer sheet was simultaneously stretched 5.5 times in a longitudinal direction and 5.5 times in a transverse direction at 118°C. The stretched film was subject to extraction of diluent in the polyethylene layer therefrom using normal hexane of 25~30°C. Heat-setting was performed at 125°C, wherein the film was lengthened 130% in a transverse direction as compared to the initial width in the stretching step and was shrunken 15.4% as compared to the final width of the stretching step in the shrinking step. The obtained mechanical properties of the separator are shown in Table 1 below.

Example 6

For a polyethylene layer, polyethylene having a weight average molecular weight of $3.0X10^5$ and a melting temperature of 135°C and paraffin oil having a kinetic viscosity of 95 cSt at 40°C, were used, and the contents of the two components were 30 wt% and 70 wt%, respectively. The polyethylene and the paraffin oil were mixed in a twin screw compounder of $\varphi = 46$ mm, and the mixing temperature was 220□. The polyethylene was fed into a main hopper and the paraffin oil, i.e. diluent, was fed into an extruder using a side feeder. For a heat resistant layer, polybutylene terephthalate having a weight average molecular weight of $4.0X10^5$, a melting temperature of 225°C and a degree of crystallinity of 35%, and $CaCo_3$ as a filler having a average particle size of 0.8 $\mu$m were used, and the contents of the two components were 40 wt% and 60 wt%, respectively. The polybutylene terephthalate and filler in the heat resistant layer were mixed/extruded in a twin screw compounder of $\varphi = 40$ mm, and the mixing/extrusion temperature was 280°C. The composition mixed/extruded as such was extruded at 280°C through a separate extruder of $\varphi = 15$ mm that is fixed to a multilayer T die designed for preparation of multilayer sheet and mounted in an extruder for extrusion of the polyethylene layer and then molded together with the polyethylene composition by a casting roll at 30 °C into a 2-layer (polyethylene layer/heat resistant layer) sheet. Through control of extrusion amounts of the two compositions, a thickness of a sheet formed of the polyethylene was 700 $\mu$m and a thickness of a sheet formed of the heat resistant resin was 100 $\mu$m.

The 2-layer sheet was simultaneously stretched 7.0 times in a longitudinal direction and 6.0 times in a transverse direction at 115°C. The stretched film was subject to extraction of diluent in the polyethylene layer therefrom using methylene chloride of 25~30°C. Heat-setting was performed at 129°C, wherein the film was lengthened 140% in a transverse direction as compared to the initial width in the stretching step and was shrunken 17.9% as compared to the final width of the stretching step in the shrinking step. The obtained mechanical properties of the separator are shown in Table 1 below.

Comparative Example 1

For a polyethylene layer, polyethylene having a weight average molecular weight of $3.0X10^5$ and a melting temperature of 135°C and paraffin oil having a kinetic viscosity of 95 cSt at 40°C, were used, and the contents of the two components were 30 wt% and 70 wt%, respectively. The polyethylene and the paraffin oil were mixed in a twin screw compounder of $\varphi = 46$ mm, and the mixing temperature was 220□. The polyethylene was fed into a main hopper and the paraffin oil, i.e. diluent, was fed into an extruder using a side feeder, and they were extruded through a T die and molded by a casting roll at 30°C into a single layer (polyethylene layer) sheet. A thickness of the polyethylene sheet was 1,100 $\mu$m.

The polyethylene sheet was sequentially stretched 7.0 times in a longitudinal direction at 116°C and 5.0 times in a transverse direction at 124°C. The stretched film was subject to extraction of diluent in the polyethylene layer therefrom using methylene chloride of 25~30°C. Heat-setting was performed at 128□, wherein the film was lengthened 140% in a transverse direction as compared to the initial width in the stretching step and was shrunken 21.4% as compared to the final width of the stretching step in the shrinking step. The obtained mechanical properties of the separator are shown in Table 1 below.

Comparative Example 2

For a polyethylene layer, polyethylene having a weight average molecular weight of $3.0X10^5$ and a melting temperature of 135°C and paraffin oil having a kinetic viscosity of 95 cSt at 40°C, were used, and the contents of the two components were 30 wt% and 70 wt%, respectively. The polyethylene and the paraffin oil were mixed in a twin screw compounder of $\varphi$ = 46 mm, and the mixing temperature was 220□. The polyethylene was fed into a main hopper and the paraffin oil, i.e. diluent, was fed into an extruder using a side feeder. For a heat resistant layer, homopolypropylene having a weight average molecular weight of $5.7X10^5$, a melting temperature of 163°C and a degree of crystallinity of 51%, and CaC03 as a filler having a average particle size of 1.5 $\mu$m were used, and the contents of the two components were 30 wt% and 70 wt%, respectively. The homopolypropylene and filler in the heat resistant layer were mixed/extruded in a twin screw compounder of $\varphi$ = 40 mm, and the mixing/extrusion temperature was 230°C. The composition mixed/extruded as such was extruded at 230°C through a separate extruder of $\varphi$ = 15 mm that is fixed to a multilayer T die designed for preparation of multilayer sheet and mounted in an extruder for extrusion of the polyethylene layer and then molded together with the polyethylene composition by a casting roll at 30°C into a 3-layer (polyethylene layer/heat resistant layer/polyethylene layer) sheet. Through control of extrusion amounts of the two compositions, a thickness of a sheet formed of the polyethylene was 400 $\mu$m and a thickness of a sheet formed of the heat resistant resin was 150 $\mu$m, respectively.

The 3-layer sheet was sequentially stretched 7 times in a longitudinal direction at 112°C and 6 times in a transverse direction at 122°C. The stretched film was subject to extraction of diluent in the polyethylene layer therefrom using methylene chloride of 25~30°C. Heat-setting was performed at 130°C, wherein the film was lengthened 150% in a transverse direction as compared to the initial width in the stretching step and was shrunken 26.7% as compared to the final width of the stretching step in the shrinking step. The obtained mechanical properties of the separator are shown in Table 1 below.

Comparative Example 3

For a polyethylene layer, polyethylene having a weight average molecular weight of $3.0X10^5$ and a melting temperature of 135°C and paraffin oil having a kinetic viscosity of 95 cSt at 40°C, were used, and the contents of the two components were 30 wt% and 70 wt%, respectively. The polyethylene and the paraffin oil were mixed in a twin screw compounder of $\varphi$ = 46 mm, and the mixing temperature was 220°C. The polyethylene was fed into a main hopper and the paraffin oil, i.e. diluent, was fed into an extruder using a side feeder. For a resin-filler layer, high density polyethylene having a weight average molecular weight of $1.5X10^5$, a melting temperature of 134°C and a degree of crystallinity of 72%, and $CaCO_3$ as a filler having a average particle size of 2.5 $\mu$m were used, and the contents of the two components were 30 wt% and 70 wt%, respectively. The high density polyethylene and filler in the resin-filler layer were mixed/extruded in a twin screw compounder of $\varphi$ = 40 mm, and the mixing/extrusion temperature was 220°C. The composition mixed/extruded as such was extruded at 220°C through a separate extruder of $\varphi$ = 15 mm that is fixed to a multilayer T die designed for preparation of multilayer sheet and mounted in an extruder for extrusion of the polyethylene layer and then molded together with the polyethylene composition by a casting roll at 30°C into a 2-layer (polyethylene layer/resin-filler layer) sheet. Through control of extrusion amounts of the two compositions, a thickness of a sheet formed of the polyethylene was 600 $\mu$m and a thickness of a sheet formed of the resin-filler was 200 $\mu$m.

The 2-layer sheet was sequentially stretched 6 times in a longitudinal direction at 110°C and 5.5 times in a transverse direction at 127°C. The stretched film was subject to extraction of diluent in the polyethylene layer therefrom using methylene chloride of 25~30°C. Heat-setting was performed at 126°C, wherein the film was lengthened 130% in a transverse direction as compared to the initial width in the stretching step and was shrunken 15.4% as compared to the final width of the stretching step in the shrinking step. The obtained mechanical properties of the separator are shown in Table 1 below.

Comparative Example 4

For a polyethylene layer, polyethylene having a weight average molecular weight of 3.0X10$^5$ and a melting temperature of 135°C and paraffin oil having a kinetic viscosity of 95 cSt at 40°C, were used, and the contents of the two components were 30 wt% and 70 wt%, respectively. The polyethylene and the paraffin oil were mixed in a twin screw compounder of $\varphi$ = 46 mm, and the mixing temperature was 220°C. The polyethylene was fed into a main hopper and the paraffin oil, i.e. diluent, was fed into an extruder using a side feeder. For a heat resistant layer, polypropylene with ethylene as a comonomer having a weight average molecular weight of 2.5X10$^5$, a melting temperature of 153°C and a degree of crystallinity of 42%, and $CaCO_3$ as a filler having a average particle size of 1.5 $\mu$m were used, and the contents of the two components were 65 wt% and 35 wt%, respectively. The polypropylene and filler in the heat resistant layer were mixed/extruded in a twin screw compounder of $\varphi$ = 40 mm, and the mixing/extrusion temperature was 220°C. The composition mixed/extruded as such was extruded at 220°C through a separate extruder of $\varphi$ = 15 mm that is fixed to a multilayer T die designed for preparation of multilayer sheet and mounted in an extruder for extrusion of the polyethylene layer and then molded together with the polyethylene composition by a casting roll at 30 °C into a 3-layer (polyethylene layer/heat resistant layer/polyethylene layer) sheet. Through control of extrusion amounts of the two compositions, a thickness of a sheet formed of the polyethylene was 370 $\mu$m and a thickness of a sheet formed of the heat resistant resin was 100 $\mu$m, respectively.

The 3-layer sheet was simultaneously stretched 6 times in a longitudinal direction and 6 times in a transverse direction at 119°C. The stretched film was subject to extraction of diluent in the polyethylene layer therefrom using methylene chloride of 25~30°C. Heat-setting was performed at 120°C, wherein the film was lengthened 135% in a transverse direction as compared to the initial width in the stretching step and was shrunken 18.5% as compared to the final width of the stretching step in the shrinking step. The obtained mechanical properties of the separator are shown in Table 1 below.

Comparative Example 5

For a polyethylene layer, polyethylene having a weight average molecular weight of 3.0X10$^5$ and a melting temperature of 135°C and paraffin oil having a kinetic viscosity of 95 cSt at 40°C, were used, and the contents of the two components were 30 wt% and 70 wt%, respectively. The polyethylene and the paraffin oil were mixed in a twin screw compounder of $\varphi$ = 46 mm, and the mixing temperature was 220°C. The polyethylene was fed into a main hopper and the paraffin oil, i.e. diluent, was fed into an extruder using a side feeder. For a heat resistant layer, polycarbonate having a weight average molecular weight of 2.0X10$^5$ and a glass transition temperature of 150°C, and $CaCO_3$ as a filler having a average particle size of 2.5 $\mu$m were used, and the contents of the two components were 30 wt% and 70 wt%, respectively. The polycarbonate and filler in the heat resistant layer were mixed/extruded in a twin screw compounder of $\varphi$ = 40 mm, and the mixing/extrusion temperature was 240°C. The composition mixed/extruded as such was extruded at 240°C through a separate extruder of $\varphi$ = 15 mm that is fixed to a multilayer T die designed for preparation of multilayer sheet and mounted in an extruder for extrusion of the polyethylene layer and then molded together with the polyethylene composition by a casting roll at 30 °C into a 2-layer (polyethylene layer/heat resistant layer) sheet. Through control of extrusion amounts of the two compositions, a thickness of a sheet formed of the polyethylene was 600 $\mu$m and a thickness of a sheet formed of the heat resistant resin was 150 $\mu$m.

The 2-layer sheet was simultaneously stretched 5.5 times in a longitudinal direction and 5.5 times in a transverse direction at 120°C. The heat resistant resin layer was not stretched in the stretching process and therefore the next processes such as extraction were not conducted.

While the present invention has been described with respect to the specific embodiments, it will be apparent to those skilled in the art that various changes and modifications may be made without departing from the spirit and scope of the invention as defined in the following claims.

[TABLE 1]

| Item | Film thickness (μm) | Permeability (Darcy× 10⁻⁵) | Mean pore diameter of polyethylene layer (μm) | Representative diameter of heat resistant layer (μm) | Puncture strength (N/ μm) | High temperature puncture strength (120□, N/ μm) | Maximum TMA shrinkage in transverse direction (%) 2.0mN/μm | Melt fracture temperature (°C) | Shrinkage (120°C, 1hr) Longitudinal direction | Transverse direction |
|---|---|---|---|---|---|---|---|---|---|---|
| Example 1 | 20 | 3.2 | 0.04 | 18 | 0.20 | 0.08 | 0% or less | 185 | 10% | 12% |
| Example 2 | 20 | 3.0 | 0.04 | 13 | 0.23 | 0.11 | 0% or less | 190 | 9% | 8% |
| Example 3 | 20 | 4.9 | 0.05 | 21 | 0.19 | 0.08 | 0% or less | 210 | 9% | 10% |
| Example 4 | 20 | 2.5 | 0.04 | 15 | 0.25 | 0.12 | 0% or less | 190 | 8% | 7% |
| Example 5 | 29 | 2.7 | 0.04 | 12 | 0.18 | 0.06 | 0% or less | 185 | 9% | 11% |
| Example 6 | 16 | 2.2 | 0.03 | 17 | 0.27 | 0.14 | 0% or less | 215 | 8% | 9% |
| Comparative Example 1 | 20 | 3.0 | 0.04 | - | 0.21 | 0.06 | 0% or less | 145 | 10% | 11% |
| Comparative Example 2 | 21 | 4.5 | 0.04 | >50 | 0.15 | 0.02 | 11% | 165 | 10% | 8% |
| Comparative Example 3 | 23 | 3.3 | - | 15 | 0.20 | 0.06 | 6% | 155 | 11% | 15% |
| Comparative Example 4 | 18 | 0 | 0.03 | <5 | 0.20 | 0.10 | 0% or less | 185 | 10% | 10% |
| Comparative Example 5 | - | - | - | - | - | - | - | - | - | - |

**[Industrial Applicability]**

The microporous multilayer film in accordance with the present invention not only possesses a low shutdown temperature due to polyethylene and a high meltdown temperature and low shrinkage property due to the heat resistant resin and the filler at the same time but also possesses uniform micropores and high strength/stability properties that are characteristics of a separator prepared by a wet process and high permeability/high strength properties according to large pores prepared by a dry process at the same time, thereby capable of showing excellent effect when used in a high capacity/high power secondary battery.

**Claims**

1. A microporous polyolefin multilayer film having two or more stacked layers, wherein at least one layer is a microporous polyethylene layer containing 90-100 wt% of polyethylene having a melting temperature of 130~140°C and at least one the other layer is a heat resistant resin layer containing a heat resistant resin selected from the group consisting of a semi-crystalline polymer having a degree of crystallinity of 10-45% or a heat of fusion for melting of 20-90 J/g and having a melting temperature of 145~250°C and a glass transition temperature of -100~90°C, an amorphous polymer having a glass transition temperature of 90~120°C, and a mixture thereof.

2. The microporous polyolefin multilayer film of claim 1, wherein the heat resistant resin layer includes 20~75wt% of heat resistant resin and 25-80 wt% of a filler selected from the group consisting of an organic filler, an inorganic filler and a mixture thereof which remain in solid phase at 130°C.

3. The microporous polyolefin multilayer film of claim 2, wherein the microporous polyethylene layer has a mean pore diameter of 0.02~0.1 $\mu$m and the heat resistant resin layer has a representative diameter of 5-100 $\mu$m.

4. The microporous polyolefin multilayer film of claim 3, wherein the microporous polyolefin film has three or more stacked layers and has a layer containing 90-100 wt% of polyethylene having a melting temperature of 130°C or more as both surface layers.

5. The microporous polyolefin multilayer film of one of claims 1 to 4, wherein the microporous polyolefin multilayer film has a thickness of 9-30 $\mu$m, a puncture strength of 0.15 N/ $\mu$m or more, a permeability of 1.5X10$^{-5}$ Darcy or more, a puncture strength at 120°C of 0.05 N/$\mu$m or more and a melt fracture temperature of 170°C or more.

6. The microporous polyolefin multilayer film of claims 5, wherein the microporous polyolefin multilayer film has a thickness of 9-30 $\mu$m, a puncture strength of 0.20N/$\mu$m or more, a permeability of 2.0X10$^{-5}$ Darcy or more, a puncture strength at 120°C of 0.06N/$\mu$m or more and a melt fracture temperature of 180°C or more.

7. The microporous polyolefin multilayer film of claims 6, wherein shrinkages at 120°C for 1 hour in longitudinal and transverse directions are 0~12%, respectively, and a TMA maximum shrinkage in the transverse direction under an external stress of 2.0 mN/$\mu$m normalized with the film thickness is 0% or less.

```
TMA shrinkage (%) = 100 X {(initial length - length of
specimen at respective temperature) / initial length}
```

8. The microporous polyolefin multilayer film of claims 7, wherein shrinkages at 120°C for 1 hour in longitudinal and transverse directions are 0~10%, respectively, and a TMA maximum shrinkage in the transverse direction under an external stress of 1.5mN/ $\mu$m normalized with the film thickness is 0% or less.

```
TMA shrinkage (%) = 100 X {(initial length - length of
specimen at respective temperature) / initial length}
```

【Figure 1】

【Figure 2】

**REFERENCES CITED IN THE DESCRIPTION**

**Patent documents cited in the description**

- US 4247498 A
- US 6949315 B
- US 5641565 A
- US 20060055075 A1
- US 5691077 A
- JP 2002321323 A
- WO 2004089627 A
- WO 2006038532 A
- WO 2007046473 A